# EUROPÄISCHE PATENTANMELDUNG

(11) **EP 3 771 493 A1**
(43) Veröffentlichungstag der Anmeldung: **03.02.2021**
(21) Anmeldenummer: 20185056.7
(22) Anmeldetag: 09.07.2020
(51) Int. Cl.: B02C 21/02, B02C 23/02, B07B 1/00, B07B 13/16

(54) **GESTEINS-BEARBEITUNGSMASCHINE**

(30) Priorität: 30.07.2019 DE 102019120580
(71) Anmelder: KLEEMANN GMBH, 73037 Göppingen (DE)
(72) Erfinder: GEYWITZ, Tobias, 73054 Eislingen (DE); RUDOLPH, Lars, 70439 Stuttgart (DE); SCHEURER, Emil, 73117 Wangen (DE)
(74) Vertreter: Herrmann, Jochen

(57) **Zusammenfassung**

Die Erfindung betrifft eine Gesteins-Bearbeitungsmaschine mit einem Aufgabetrichter (40) und einer diesem nachgeordneten Prozesseinheit, wobei dem Aufgabetrichter (40) eine Fördereinrichtung, insbesondere ein Trichterabzugsband zugeordnet ist, wobei der Aufgabetrichter (40) eine Trichterseitenwand (42) aufweist, und wobei der Trichterseitenwand (42) eine Seitenwanderhöhung (44) zugeordnet ist, die zwischen einer aufgeklappten Arbeitsposition und einer abgeklappten Transportposition verschwenkbar ist. Bei einer solchen Gesteins-Bearbeitungsmaschine wird den Anforderungen an den Arbeitsschutz dann in einfacher Weise effektiv Rechnung getragen, wenn vorgesehen ist, dass der Seitenwanderhöhung (44) eine Bedieneinheit (50) mit einem Hebel (51) zur Verschwenkung der Seitenwanderhöhung (44) zugeordnet ist, wobei der Hebel (51) mittels eines Übertragungselements (52) mit der Seitenwanderhöhung (44) gekoppelt ist, und dass die Seitenwanderhöhung (44) in der aufgeklappten Arbeitsposition mit einem verstellbaren Verriegelungselement (60) gesichert ist.

## Beschreibung

Die Erfindung betrifft eine Gesteins-Bearbeitungsmaschine mit einem Aufgabetrichter und einer diesem nachgeordneten Prozesseinheit, wobei dem Aufgabetrichter eine Fördereinrichtung, insbesondere ein Trichterabzugsband zugeordnet ist, wobei der Aufgabetrichter eine Trichterseitenwand aufweist, und wobei der Trichterseitenwand eine Seitenwanderhöhung zugeordnet ist, die zwischen einer aufgeklappten Arbeitsposition und einer abgeklappten Transportposition verschwenkbar ist.

Gesteins-Bearbeitungsanlagen werden zu verschiedenen Zwecken eingesetzt. Sie dienen beispielsweise zum Zerkleinern und/oder Aussieben von Recycling- und/oder Gesteinsmaterial in einem Aufbereitungsprozess. Diese Maschinen lassen sich entweder als mobile oder als stationäre Anlagen einsetzen. Über eine Aufgabeeinheit wird das zu bearbeitende Gut in einen Aufgabetrichter der Anlage eingefüllt. Hierzu werden üblicherweise Bagger eingesetzt. Der Bagger legt das zu brechende oder abzusiebende Gut in einer Fördereinrichtung bspw. In einer Förderrinne ab, der dem Aufgabetrichter zugeordnet ist. Das zu bearbeitende Material wird mit einer Fördereinrichtung in Förderrichtung zu einer nachfolgenden Prozesseinheit geführt.

In der nachfolgenden Prozesseinheit wird dann das Material bearbeitet, beispielsweise gebrochen oder gesiebt.

Der Aufgabetrichter stellt ein gewisses Puffervolumen dar, aus dem die Gesteins-Bearbeitungsmaschine so lange versorgt wird, bis der Bagger erneut Material in den Aufgabetrichter nachlädt. Der Aufgabetrichter muss daher ein ausreichend großes Volumen bereitstellen, um zum einen das mit einer Baggerschaufel eingefüllte Material auch tatsächlich aufnehmen zu können und zum anderen die besagte Pufferwirkung bereitstellen zu können. Aus diesem Grund bauen die Aufgabetrichter nach oben geräumig über die Maschine vor.

Bei Gesteins-Bearbeitungsanlage handelt es sich um Maschinen, die erhebliche Außenabmessungen aufweisen. Um sie zum jeweiligen Arbeitsort bewegen zu können, werden Tieflader eingesetzt. Die Außenabmessungen der Maschine müssen so sein, dass ein Transport im gesetzlich zulässigen Rahmen stattfinden kann. Die Aufgabetrichter erweisen sich dabei häufig als problematisch, insbesondere dort, wo der maximale Bauraum in der Höhe beschränkt ist. Es ist daher bekannt, die Seitenwände eines Aufgabetrichters mehrteilig auszubilden. Dementsprechend weist die Seitenwand einen feststehenden Wandteil und einen oder mehrere daran anscharniert klappbare Wandteile auf.

Bei großen Maschinen sind dort, wo der Bagger nachlädt, große Trichtererweiterungen vorgesehen, die aufgrund ihres hohen Gewichts meist hydraulisch verschwenkt werden. In Transportrichtung des Prozessmaterials schließt sich an die hohe Trichtererweiterung eine niedriger aufbauende Seitenwanderhöhung an, die ebenfalls klappbar angeordnet ist. Diese Seitenwanderhöhung wird vom Bedienpersonal manuell bedient und in die Arbeitsposition gebracht. Zu diesem Zweck muss das Bedienpersonal in den Transportbereich des Aufgabetrichters hineinsteigen und kann dann von dort aus die Seitenwanderhöhung aufrichten bzw. abklappen. Diese Vorgehensweise ist aus Arbeitsschutzgründen problematisch.

Es ist Aufgabe der Erfindung, eine Gesteins-Bearbeitungsmaschine der eingangs erwähnten Art bereitzustellen, die so gestaltet ist, dass sie den Anforderungen an den Arbeitsschutz genügt.

Diese Aufgabe wird dadurch gelöst, dass der Seitenwanderhöhung eine Bedieneinheit mit einem Hebel zur Verschwenkung der Seitenwanderhöhung zugeordnet ist, wobei der Hebel mittels eines Übertragungselements mit der Seitenwanderhöhung gekoppelt ist. Der Benutzer kann dementsprechend die Seitenwanderhöhung bequem und unterstützt durch die Hebelkraft zwischen der Transportposition und der Arbeitsposition verschwenken. Dazu muss er sich nicht mehr im Gefahrenbereich des Aufgabetrichters bewegen. Das Übertragungselement, an das der Hebel angekoppelt ist, ermöglicht es ihm aus einer gesicherten Position heraus, beispielsweise wenn er auf einer Arbeitsbühne steht, den Hebel zu bedienen.

Wenn der Benutzer die Seitenwanderhöhung in die aufgeklappte Arbeitsposition bewegt hat, so kann er deren Position mit einem verstellbaren Verriegelungselement sichern. Auch hier kann er aus der gesicherten Position heraus arbeiten, beispielsweise von der Arbeitsbühne das Verriegelungselement verstellen, um die Seitenwanderhöhung in der Arbeitsposition zu blockieren. Die erfindungsgemäße Gesteins-Bearbeitungsmaschine erfüllt damit in einfacher Weise die gestellten Anforderungen an den Arbeitsschutz.

Gemäß einer bevorzugten Erfindungsvariante kann es vorgesehen sein, dass der Hebel über eine lösbare Formschlussverbindung, die vorzugsweise als Steckverbindung ausgebildet ist, mit dem Übertragungselement gekoppelt bzw. koppelbar ist, wobei die Formschlussverbindung einen Formschluss in Schwenkrichtung des Hebels bildet. Der Benutzer kann den Hebel mit dem Übertragungselement koppeln, wenn er die Seitenwanderhöhung verstellen möchte. Nachdem er diese Arbeit abgeschlossen hat, kann er den Hebel wieder entfernen und an einem sicheren Aufbewahrungsort in der Nähe des Übertragungselements lagern. Der abnehmbare Hebel steht nicht störend im Bereich der Seitenwanderhöhung vor und bildet somit auch kein Sicherheitsrisiko.

Wenn vorgesehen ist, dass die Seitenwanderhöhung mittels eines oder mehrerer Schwenklager, um eine Schwenkachse verschwenkbar ist, wobei die Schwenklager mit jeweils einem Lagerabschnitt an der Seitenwanderhöhung und mit einem Gegenlagerstück an der Trichterseitenwand mittelbar oder unmittelbar befestigt sind, und dass die Betätigungseinheit an dem Lagerabschnitt eines der Schwenklager drehfest angekoppelt ist, dann wird eine einfache und stabile Konstruktion möglich.

Besonders bevorzugt kann es vorgesehen sein, dass die Trichterseitenwand, die Seitenwanderhöhung und die Schwenkachse, um die die Seitenwanderhöhung verschwenkt werden kann, sich in Transportrichtung der Fördereinrichtung erstrecken, und dass der Hebel an dem in Transportrichtung hinteren Endbereich der Seitenwand so angeordnet ist, dass er von einer Bedienperson, die vorzugsweise auf einer Arbeitsbühne steht, zugänglich ist. In diesem Bereich bildet die Gesteins-Bearbeitungsmaschine eine geringere Breite, als sie am Aufgabetrichter vorliegt. Insofern beeinflusst hier die Arbeitsbühne für das Bedienpersonal die Transportbreite der Gesteins-Bearbeitungsmaschine nicht oder nur unwesentlich. Über die Arbeitsbühne wird eine sichere Standposition für ein bequemes Arbeiten erreicht.

Wenn vorgesehen ist, dass an das Verriegelungselement über einen Verbindungsabschnitt ein Verriegelungsschieber angekoppelt ist, wobei der Verriegelungsschieber einen Griff trägt oder an einen solchen angekoppelt ist, und dass der Griff vorzugsweise im Bereich des Hebels angeordnet ist, dann lässt sich das Verriegelungselement ebenfalls einfach von dem Standort des Bedieners bedienen.

Alternativ kann es auch vorgesehen sein, dass der Verriegelungsschieber drehfest mit dem Hebel verbunden ist. Dann kann mit dem Verriegelungsschieber sowohl das Verriegelungselement verstellt als auch die Seitenwanderhöhung verschwenkt werden. Hierdurch ergibt sich ein denkbar einfacher Aufbau.

Wie dies bereits vorstehend erwähnt wurde, kann es vorgesehen sein, dass im Bereich des Aufgabetrichters eine Arbeitsbühne angeordnet ist, die einen Bühnenabschnitt aufweist, über die der Hebel und ein Griff des Verriegelungsschiebers für eine Bedienperson zugänglich sind.

Die Seitenwanderhöhung endet vorzugsweise im Bereich dieses Bühnenabschnitts und das dem Bühnenabschnitt abgewandte Ende des Verriegelungsschiebers trägt das Verriegelungselement. Auf diese Weise kann ein der Arbeitsbühne ferner Bereich der Seitenwanderhöhung von der Arbeitsbühne her zuverlässig verriegelt werden. Bedarfsweise kann zusätzlich auch bequem von der Arbeitsbühne her eine zusätzliche Verriegelung und Blockade der Seitenwanderhöhung an dem der Arbeitsbühne nahen Ende der Seitenwanderhöhung vorgenommen werden.

Eine mögliche Erfindungsvariante kann dergestalt sein, dass die Seitenwanderhöhung mittels zweier oder mehrere Schwenklager an die Trichterseitenwand schwenkbar angekoppelt ist, und dass die Schwenklager Führungselemente aufweisen, die eine Schiebeführung für den Verriegelungsschieber bilden. Hierdurch ergibt sich eine platzsparende und einfache Bauweise. Vorzugsweise kann es dabei auch vorgesehen sein, dass die Schwenkachse der Schwenklager durch die Führungselemente verläuft.

Eine erfindungsgemäße Gesteins-Bearbeitungsmaschine kann derart ausgeführt sein, dass das Übertragungselement als offenes oder geschlossenes Hohlprofil ausgebildet ist oder ein solches aufweist, und dass der Verriegelungsschieber in oder an dem Hohlprofil geführt ist. Das Hohlprofil bildet dementsprechend eine zuverlässige Führung für den Verriegelungsschieber.

Wenn es dabei auch vorgesehen ist, dass an den Verriegelungsschieber ein Griff zur Verstellung des Verriegelungsschiebers zwischen einer Verriegelungsstellung und einer Entriegelungsstellung des Verriegelungselements angekoppelt ist, dann lässt sich der Verriegelungsschieber einfach bedienen. Vorzugsweise kann es dabei auch vorgesehen sein, dass der Griff in einer Führung des Übertragungselements geführt ist. Damit wird eine definierte Zuordnung des Griffs zum Übertragungselement sichergestellt. Die Führung kann beispielsweise von einem Durchbruch des Hohlprofils gebildet sein, durch die der Griff hindurchragt. Hierdurch ergibt sich eine stabile und zuverlässig arbeitende Ausführung.

Wenn vorgesehen ist, dass der Verriegelungsschieber eine Aufnahme für ein Sperrelement aufweist, welches in der Verriegelungsposition des Verriegelungsschiebers die Stellbewegung des Verriegelungsschiebers in die Entriegelungsposition blockiert, wobei vorzugsweise das Sperrelement im Bedienbereich des Hebels angeordnet ist, dann wird während des Betriebseinsatzes der Gesteins-Bearbeitungsmaschine verhindert, dass sich das Verriegelungselement unbeabsichtigt lösen und die Seitenwanderhöhung abklappen kann.

Zur Reduzierung des Teile- und Montageaufwands kann es vorgesehen sein, dass der Verriegelungsschieber als Profilabschnitt ausgebildet ist oder einen solchen aufweist, wobei der Profilabschnitt an seinem einen längsseitigen Ende das Verriegelungselement trägt und an seinem anderen Ende bis in den Bedienbereich des Hebels geführt ist. Als Profilabschnitt lässt sich beispielsweise in einfachster Weise ein stabförmiges Vollprofil, insbesondere ein Rundstab einsetzen. Vorzugsweise ist das Verriegelungselement einteilig mit dem Profilabschnitt ausgeführt.

Hierbei ist es insbesondere denkbar, dass der Profilabschnitt des Verriegelungsschiebers an seinem dem Hebel abgewandten Ende einen abgebogenen Bereich aufweist, der den Verbindungsabschnitt bildet und der das Verriegelungselement im Abstand zu der Schwenkachse der Seitenwanderhöhung hält. Über die Beabstandung wird ein Hebelarm gebildet, über den die Last der Seitenwanderhöhung in der Arbeitsposition zuverlässig abgetragen werden kann. Dadurch dass das Verriegelungselement von dem Profilabschnitt abgebogen ist, ergibt sich eine stabile und einfache Bauweise.

Eine denkbare Erfindungsalternative ist dergestalt, dass der Verriegelungsschieber zusätzlich zu dem Verriegelungselement ein weiteres Verriegelungselement trägt, welches in dem dem Hebel zugewandten Bereich im Abstand zu der Schwenkachse der Seitenwanderhöhung angeordnet ist. Über das weitere Verriegelungselement wird eine zusätzliche Sicherung erreicht, so dass beispielsweise die Last der Seitenwanderhöhung über beide Verriegelungselemente abgetragen werden kann. Bei Ausfall eines Verriegelungselements dient das weitere Verriegelungselement als redundantes Element. Dadurch dass beide Verriegelungselemente an dem Verriegelungsschieber vorhanden sind, können bei entsprechender Auslegung, mit einer Verriegelungs-Bewegung beide Verriegelungselemente zwischen ihrer Verriegelungsposition und ihrer Entriegelungsposition verstellt werden.

Eine weitere Erfindungsvariante sieht vor, dass das Übertragungselement Teil des Verriegelungsschiebers ist, wobei der Hebel drehfest mit dem Verriegelungsschiebers verbunden ist.

Die Erfindung wird im Folgenden anhand eines in den Zeichnungen dargestellten Ausführungsbeispiels näher erläutert. Es zeigen:
- Figur 1:: eine Gesteins-Bearbeitungsanlage in perspektivischer Ansicht,
- Figur 2:: eine schematische Darstellung die Gesteins-Bearbeitungsanlagen gemäß Figur 1 in Seitenansicht,
- Figur 3:: eine der Figur 1 entnommene Detaildarstellung,
- Figur 4:: ein Detail der Figur 3 in einer veränderten Perspektive und
- Figur 5:: die Darstellung gemäß Figur 3 in einer veränderten Betriebsstellung.

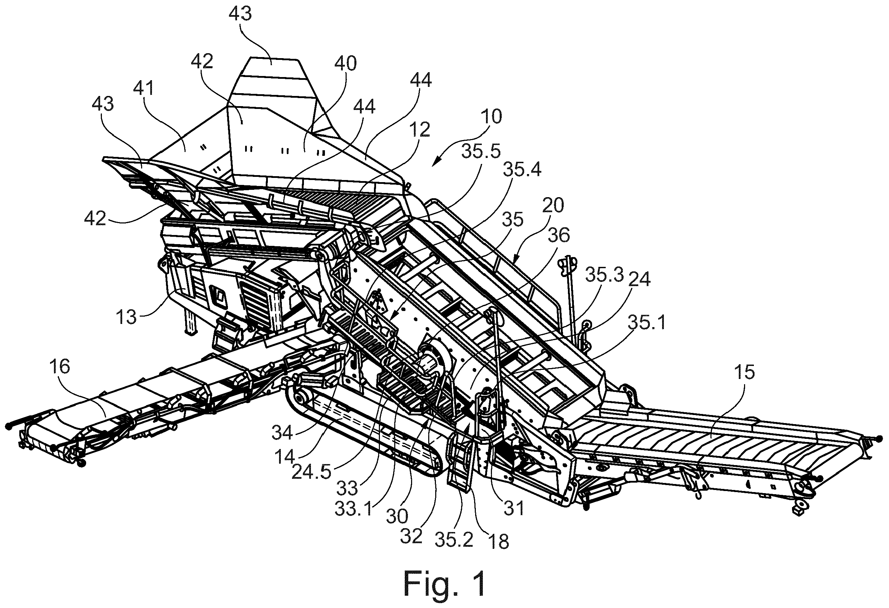

Figur 1 zeigt eine Gesteins-Bearbeitungsmaschine 10, an der die Erfindung beispielhaft erläutert werden soll. Bei dieser Gesteins-Bearbeitungsmaschine 10 handelt es sich um eine Siebmaschine. Allerdings ist die Erfindung auf die Anwendung bei einer Siebmaschine nicht beschränkt. Vielmehr kann die Erfindung auch bei einer anderen Gesteins-Bearbeitungsmaschinen, beispielsweise bei einem Gesteinsbrecher, insbesondere einem Backenbrecher oder einem Rotationsprallbrecher eingesetzt werden. Weiterhin kann die Erfindung auch bei kombinierten Gesteinsbrechanlagen mit Siebanlagen eingesetzt werden. Die nachfolgenden Erläuterungen sind daher nur beispielhaft anhand einer Siebanlage beschrieben. Die nachfolgenden Ausführungen gelten insbesondere für die vorgenannten Gesteins-Bearbeitungsanlagen.

Wie Figur 1 zeigt, weist die Gesteins-Bearbeitungsmaschine 10 ein Maschinengestell 13 auf, welches von Fahrwerken 14, die beispielsweise als Kettenlaufwerke ausgebildet sind, getragen wird. Weiterhin weist die Gesteins-Bearbeitungsmaschine 10 einen Aufgabetrichter 40 auf. Über diesen kann sie mit zu bearbeitendem Gesteinsmaterial beschickt werden. Im Bereich des Aufgabetrichters 40 ist eine Fördereinrichtung vorgesehen, die beispielsweise von einem Trichterabzugsband 12 gebildet ist. Weiterhin ist anstelle eines Trichterabzugsbands 12 auch die Verwendung einer Förderrinne mit einer Fördereinrichtung denkbar, die als Vibrationsförderer ausgeführt ist.

Im Anschluss an den Aufgabetrichter 40 besitzt die Gesteins-Bearbeitungsmaschine 10 eine Prozesseinheit 20. Bei der Prozesseinheit 20 handelt es sich vorliegend um eine Siebvorrichtung.

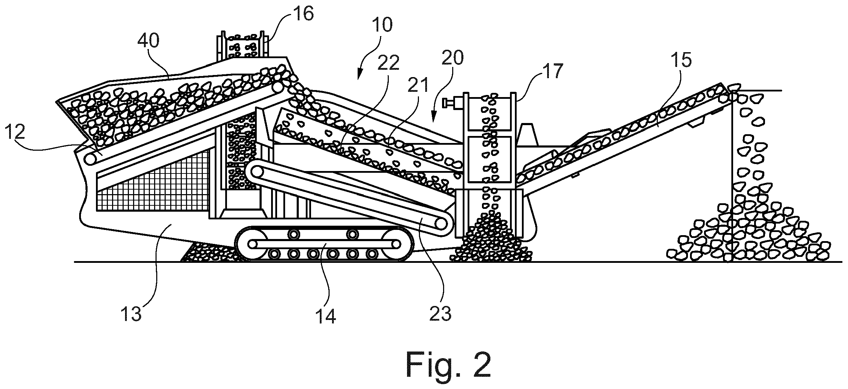

Der Aufbau und die Funktion dieser Siebvorrichtung werden nachfolgend unter Bezugnahme auf Figur 2 näher erläutert. Wie diese Darstellung zeigt, weist die Prozesseinheit 20 im Anschluss an das Trichterabzugsband 12 ein Siebdeck 21 auf. Auf dieses Siebdeck wird das Gesteinsmaterial mittels des Trichterabzugsbands 12 gefördert. Das Siebdeck 21 weist einen Siebrost auf, der eine vorbestimmte Maschenweite hat. Gesteinsmaterial, welches aufgrund der Baugröße nicht durch das Siebdeck 21 fallen kann, wird auf ein Transportband 15 und von diesem auf einen Schütthaufen gefördert. Das Gesteinsmaterial, welches durch das Siebdeck 21 fällt, gelangt auf das Siebdeck 22. Das Siebdeck 22 hat wieder eine vorbestimmte Maschenweite. Gesteinsmaterial, welches nicht durch das Siebdeck 22 fällt, wird einem Transportband 17 zugeführt. Dieses Transportband 17 führt seitlich aus dem Arbeitsbereich der Prozesseinheit 20 heraus. Das ausgesiebte Material wird aufgehäuft, wie dies Figur 2 erkennen lässt. Das Siebmaterial, welches durch das Siebdeck 22 fällt, gelangt auf eine Fördereinrichtung 23, beispielsweise ein endlos umlaufendes Förderband. Das ausgesiebte Feinmaterial wird zu einem Transportband 16 geführt und von diesem aus dem Arbeitsbereich der Maschine ausgetragen. Das ausgesiebte Feinmaterial wird wieder seitlich der Maschine aufgehäuft. Die beiden Siebdecks 21 und 22 sind mittels Schwingungsantrieben, insbesondere Exzenter-Antrieben angetrieben.

Das Transportband 15 kann auf eine untere Position versetzt werden, so dass das Überlauf-Oberdeck-Material des Siebdecks 21 und das Überlauf-Unterdeck-Material des Siebdecks 22 über das Transportband 15 ausgetragen wird und somit nur zwei Siebfraktionen ausgesiebt werden. Dementsprechend ist nur ein seitliches Transportband 16 verbaut. Auf das zweite seitliche Transportband 17 wurde dementsprechend verzichtet, bzw. wurde dieses entweder abgebaut oder in eine Position/Anordnung an der Anlage verbracht in der dieses Transportband entsprechend außer Funktion gesetzt ist

Weiterhin ist es denkbar, dass das Transportband 16 und das Transportband 17 wahlweise zu einer der beiden Seiten der Maschine angebaut werden kann, wie dies Figur 1 im Vergleich zu Figur 2 ebenfalls erkennen lässt. Desweiteren ist es denkbar, dass das Transportband 16 und auch das Transportband 17 auf der gleichen Seite der Anlage angeordnet sind.

Wie Figur 1 zeigt, besitzt die Maschine Arbeitsbühnen 30 zu beiden Maschinen-Längsseiten. Die Arbeitsbühnen 30 sind über jeweils einen Aufstieg 18 , beispielsweise eine Leiter zugänglich. Im Anschluss an den Aufstieg 18 ist eine Zugangsplattform 31 vorgesehen. Die Zugangsplattform 31 geht in einen schräg gestellten Bühnenabschnitt 32 über. An diesen feststehenden Bühnenabschnitt 32 schließt sich eine klappbare Bühnenverbreiterung 33 an. Die Bühnenverbreiterung 33 geht in einen weiteren feststehenden Bühnenabschnitt 34 über. Die Bühnenabschnitte 33, 34 weisen eine begehbare Zugangsfläche auf, die in einen Bodenabschnitt 33.1 der Bühnenverbreiterung 33 übergehen.

Wie Figur 1 weiter erkennen lässt, ist die Arbeitsbühne 30 auf einer Seite mittels einer Begrenzung 24 der Prozesseinheit 20 begrenzt. Die Begrenzung 24 kann beispielsweise in Form einer Wand ausgebildet sein, die sich in Längsrichtung der Arbeitsbühne 30 und damit in Längsrichtung der Gesteins-Behandlungseinrichtung 10 erstreckt.

An die Begrenzung 24 ist eine Komponente der Prozesseinheit 20 angeschlossen. Diese Komponente weist einen Vorsprung 24.5 auf, der außenseitig über die Begrenzung 24 vorsteht. Dabei steht der Vorsprung 24.5 über einen Bodenbereich 39 vor, der sich unterhalb des Vorsprungs 24.5 erstreckt. Der Bodenbereich 39 steht in Flucht zu den beiden Bühnenabschnitten 32 und 34.

Der Bodenabschnitt 33.1 der Bühnenverbreiterung 33 ist in der in Figur 1 gezeigten Arbeitsposition seitlich gegenüber den Bühnenabschnitten 32, 34 ausgestellt. Auf diese Weise kann ein Benutzer, welcher sich auf der Arbeitsbühne 30 bewegt, bei einem Gang zwischen den beiden Bühnenabschnitten 32, 34 den Vorsprung 24.5 umgehen, ohne dass dieser überstiegen werden muss.

Wie Figur 1 zeigt, ist die Arbeitsbühne 30 auf der der Begrenzung 24 gegenüberliegenden Seite mittels einer Absturzsicherung 35 begrenzt. Die Absturzsicherung 35 kann mehrere Abschnitte aufweisen. Im vorliegenden Ausführungsbeispiel weist die Absturzsicherung einen Sicherungsabschnitt 35.1 im Bereich der Zugangsplattform 31 auf. Weiterhin ist ein feststehender Geländerabschnitt 35.3 beabstandet zu dem Sicherungsabschnitt 35.1 angeordnet. Dieser Geländerabschnitt 35.3 ist dem Bühnenabschnitt 32 fest zugeordnet. Zwischen dem Sicherungsabschnitt 35.1 und dem Geländerabschnitt 35.3 ist ein Zugangsbereich 35.2 aus der Absturzsicherung 35 ausgespart. Über diesen Zugangsbereich 35.2 ist die Zugangsplattform 31 über den Aufstieg 18 zugänglich.

Ein weiterer Geländerabschnitt 35.4 der Absturzsicherung ist dem Bühnenabschnitt 34 zugeordnet. An diesen Geländerabschnitt 35.4 schließt sich ein Endabschnitt 35.5 an. Dieser überbrückt den Bereich zwischen dem Geländerabschnitt 35.4 und der Begrenzung 24 der Prozesseinheit 20.

Zwischen den beiden Geländeabschnitten 35.3 und 35.4 ist ein Geländerabschnitt 36 angeordnet. Dieser Geländerabschnitt 36 ist der Bühnenverbreiterung 33 zugeordnet.

Wie Figur 1 erkennen lässt, endet der Bühnenabschnitt 34 im Bereich des Aufgabetrichters 40.

Der Aufgabetrichter 40 weist eine Trichterrückwand 41 auf, an die sich seitlich Trichterseitenwände 42 anschließen. Dabei verlaufen die Trichterseitenwände 42 in Förderrichtung des Trichterabzugsbands 12. Die Trichterrückwand 41 und die Trichterseitenwände 42 sind als feststehende Elemente verbaut. Mit den Trichterseitenwänden 42 sind im Bereich der Trichterrückwand 41 jeweils Trichtererweiterungen 43 schwenkbar gekoppelt die Trichtererweiterungen 43 verlängern die dem Trichterinnenraum zugekehrten Flächen der Trichterseitenwände 42. Die Trichtererweiterungen 43 können fernbedient über eine hydraulische Stelleinrichtung zwischen einer in Figur 1 gezeigten Arbeitsposition und einer abgeklappten Transportposition verstellt werden. In der abgeklappten Transportposition liegen die Trichtererweiterungen 43 seitlich an dem Maschinengestell 13 an.

In Transportrichtung des Trichterabzugsbands 12 hinter den Trichtererweiterungen 43 sind Seitenwanderhöhungen 44 an den beiden Trichterseitenwände 42 vorgesehen. Auch diese Seitenwanderhöhungen 44 können zwischen der in Figur 1 gezeigten aufgerichteten Arbeitsposition und einer abgeklappten Transportposition verschwenkt werden.

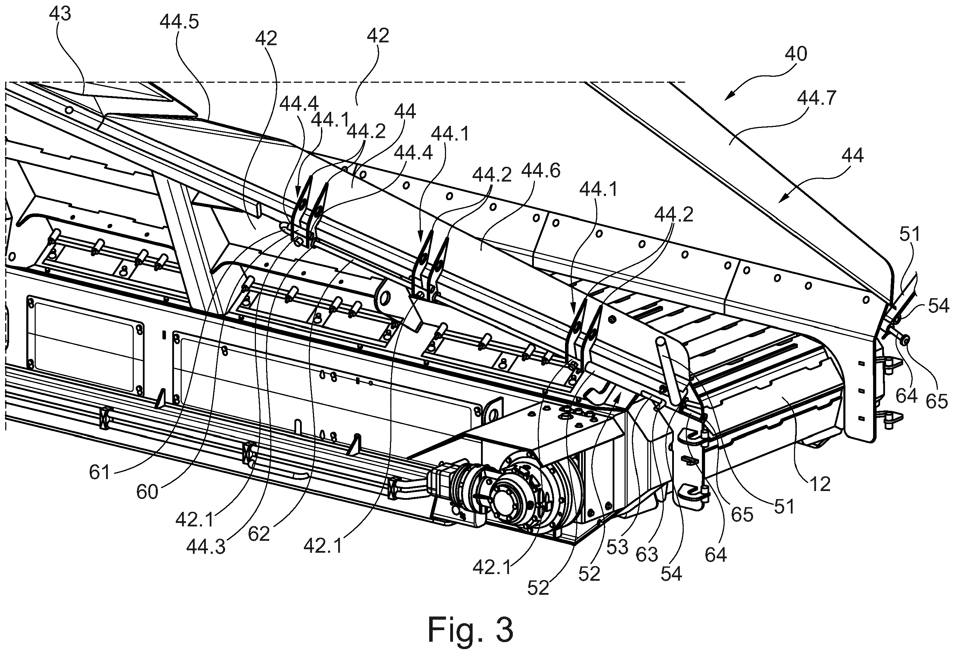

Die Gestaltung der Seitenwanderhöhungen 44 ist den Figuren 3 bis 5 näher verdeutlicht. Wie Figur 3 zeigt, wird die Seitenwanderhöhung 44 von einem Blechzuschnitt gebildet, der die Trichterseitenwand 42 in der aufgerichteten Arbeitsposition nach oben verlängert. An seinem der Trichtererweiterung 43 zugewandten Ende weist die Seitenwanderhöhung 44 eine Abkantung 44.5 auf. Wie Figur 3 erkennen lässt, ist diese Abkantung nach außen gerichtet, sodass die Innenseite 44.7 der Seitenwanderhöhung 44, im Wesentlichen ohne Absatz, in die Fläche der Trichtererweiterungen 43 übergeht.

An der dem Transportband 12 gegenüberliegenden Außenseite 44.6 ist die Seitenwanderhöhung 44 mit Lagerabschnitten 44.2 von Schwenklagern 44.1 ausgerüstet.

Diese Lagerabschnitte 44.2 können beispielsweise von blechförmigen Zuschnitten gebildet sein, wobei jeweils zwei Lagerabschnitte 44.2 Teil des Schwenklagers 44.1 sind, wie Figur 3 zeigt.

Die Lagerabschnitte 44.2 tragen Führungselemente 44.3. Dieses Führungselement 44.3 ist in Form einer hohlzylindrischen Hülse ausgeführt. In einen oder in beide der Lagerabschnitte 44.2 eines Schwenklagers 44.1 ist eine Verriegelungsaufnahme 44.4 eingebracht. Im vorliegenden Ausführungsbeispiel sind in beide Lagerabschnitte 44.2 eines Schwenklagers 44.1 Verriegelungsaufnahmen 44.4 eingearbeitet, die miteinander fluchten.

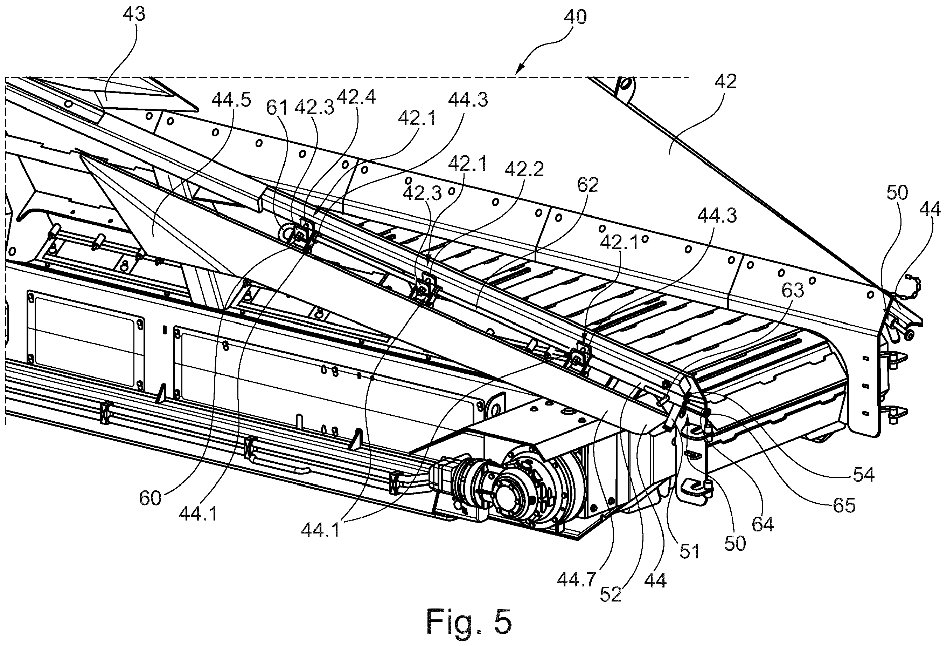

Die Seitenwanderhöhung 44 kann mit den Führungselementen 44.3 in Gegenlagerstücke 42.1 eingehangen werden. Wie Figur 5 zeigt, sind diese Gegenlagerstücke 42.1 außenseitig an der Trichterseitenwand 42 befestigt, beispielsweise verschweißt.

Die Gegenlagerstücke weisen einen Befestigungsabschnitt 42.2 auf, der an der Trichterseitenwand 42 festgemacht ist. Beabstandet zu diesem Befestigungsabschnitt 42.2 ist ein Sperrabschnitt 42.3 vorgesehen. Der Sperrabschnitt 42.3 und der Befestigungsabschnitt 42.2 gehen U-förmig über einen Verbindungsabschnitt ineinander über. Dementsprechend kann das Führungselement 44.3 von oben in den Bereich zwischen dem Befestigungsabschnitt 42.2 und dem Sperrabschnitt 42.3 eingelegt werden, wie Figur 5 veranschaulicht. Oberhalb des Führungselements 44.3 ist eine Aushebesicherung 42.4 angeordnet. Diese verhindert, dass das Führungselement 44.3 aus der in Figur 5 gezeigten Montageposition ausgehoben werden kann. Die Führungselemente 44.3 der Schwenklager 44.1 stehen zueinander in Flucht und bilden eine Schwenkachse, um die die Seitenwanderhöhung 44 verschwenkt werden kann.

Wie Figur 3 zeigt, ist an das dem Bühnenabschnitt 34 zugewandten Schwenklager 44.1 ein Übertragungselement 52 drehfest angekoppelt. Beispielsweise kann das Übertragungselement 52 mit einem Lagerabschnitt 44.2 drehfest verbunden, beispielsweise verschweißt werden. Das Übertragungselement 52 besitzt eine Aufnahme, insbesondere eine Steckaufnahme. In diese kann ein Hebel 51 mit einem Ansatz, insbesondere einem Steckansatz eingesteckt werden.

Wenn der Hebel 51 von dem Bühnenabschnitt 34 aus bewegt wird, so erfolgt ein Krafteintrag über das Übertragungselement 52 in den der Seitenwanderhöhung 44 zugeordnete Lagerabschnitt 44.2. Mit der eingebrachten Kraft kann die Seitenwanderhöhung 44 zwischen der in Figur 3 gezeigten Arbeitsposition und der in Figur 5 gezeigten Transportposition in den Schwenklagern 44.1 verschwenkt werden.

Figur 3 zeigt weiter, dass die Bedieneinheit 50, die den Hebel 51 und das Übertragungselement 52 umfasst, auch einen Verriegelungsschieber 62 aufweist. Der Verriegelungsschieber 62 erstreckt sich ausgehend von dem Ende der Seitenwanderhöhung 44, welches dem Bühnenabschnitt 34 zugeordnet ist, in Richtung der Schwenkachse der Seitenwanderhöhung 44 und in Richtung auf das dem Bühnenabschnitt 34 abgewandte Ende der Seitenwanderhöhung 44.

Der Verriegelungsschieber 62 weist einen Profilabschnitt auf, der vorzugsweise von einem Rundstab aus Vollmaterial gebildet ist. Der Verriegelungsschieber 62 ist durch die Führungselemente 44.3 hindurchgeschoben. Im Bereich des hinteren Schwenklagers 44.1 trägt der Verriegelungsschieber 62 ein Verriegelungselement 60.

Wie die Zeichnungen zeigen, kann das Verriegelungselement 60 als Bolzen ausgebildet sein, der einteilig von dem Verriegelungsschieber 62 abgebogen ist. Im vorliegenden Ausführungsbeispiel ist das Verriegelungselement 60 um 180° gegenüber dem Verriegelungsschieber 62 abgebogen. Selbstverständlich sind auch andere Winkel denkbar. Der Übergangsbereich zwischen dem Verriegelungsschieber 62 und dem Verriegelungselement 60 wird von einem gebogenen Verbindungsabschnitt 61 gebildet. Dieser Verbindungsabschnitt 61 ist ebenfalls Teil des Verriegelungsschiebers 62.

An dem dem Verriegelungselement 60 gegenüberliegenden Endbereich ist der Verriegelungsschieber 62 in das als Hohlprofil ausgebildete Übertragungselement 52 eingesetzt. Das Übertragungselement 52 weist eine seitliche Aussparung auf, die eine Führung 53 bildet. Durch diese Führung 53 hindurch ragt ein Griff 63, der mit dem Verriegelungsschieber 62 verbunden ist. Wie Figur 1 weiter zeigt, ist der Verriegelungsschieber 62 mit seinem freien Ende aus dem Übertragungselement 52 herausgeführt und weist hier einen Anschlag 65 auf.

In Figur 3 ist die Verriegelungsposition des Sperrschiebers 62 gezeigt. In dieser Position ist der Sperrschieber mit dem Griff 63 in seine Verriegelungsposition gezogen, wobei der Griff 63 an dem Ende der schlitzförmigen Führung 53 anschlägt. Zur Sicherung dieser Position ist ein Sperrelement 64, beispielsweise in Form eines Splints verwendet. Der Sperrschieber 62 weist eine Aufnahme für dieses Sperrelement 64 auf. Das Sperrelement 64 liegt in Schieberichtung des Sperrschiebers 62 formschlüssig an dem Übertragungselement 52 an.

In der gezeigten Verriegelungsstellung ist das Verriegelungselement 60 in die beiden Verriegelungsaufnahmen 44 der Lagerabschnitte 44.2 des hinteren Schwenklagers 44.1 eingesetzt. Infolge der Beabstandung des Verriegelungselements 60 von der Schwenkachse der Seitenwanderhöhung 44 ergibt sich ein Stützabstand. Dieser verhindert, dass die Seitenwanderhöhung 44 unbeabsichtigt ausgehend von der gezeigten Arbeitsposition abklappen kann.

Möchte nun der Benutzer die Seitenwanderhöhung 44 abklappen, so kann er sich auf dem Bühnenabschnitt 34 aufstellen. Der Hebel 51 und der Griff 63 der Bedieneinheit 50 sind dann in Griffweite. Er löst zunächst das Sicherungselement 54 und entfernt es. Über den Hebel 51 kann der Benutzer die Seitenwanderhöhung 44 halten. Dann schiebt er den Verriegelungsschieber 62 mittels des Griffs 63 entlang der Schwenkachse der Seitenwanderhöhung 44 nach hinten. Dabei gelangt das Verriegelungselement 60 außer Eingriff mit dem Schwenklager 44.1. Anschließend kann er mittels des Hebels 51 die Seitenwanderhöhung langsam in die abgeklappte Transportposition schwenken. Nachdem die Seitenwanderhöhung 44 diese Position erreicht hat, kann er den Hebel 51 von dem Übertragungselement 52 abziehen und ihn an einer gesicherten Position ablegen.

Das Verstellen von der in Figur 5 gezeigten Transportposition in die in Figur 3 gezeigte Montageposition erfolgt in umgekehrter Richtung.

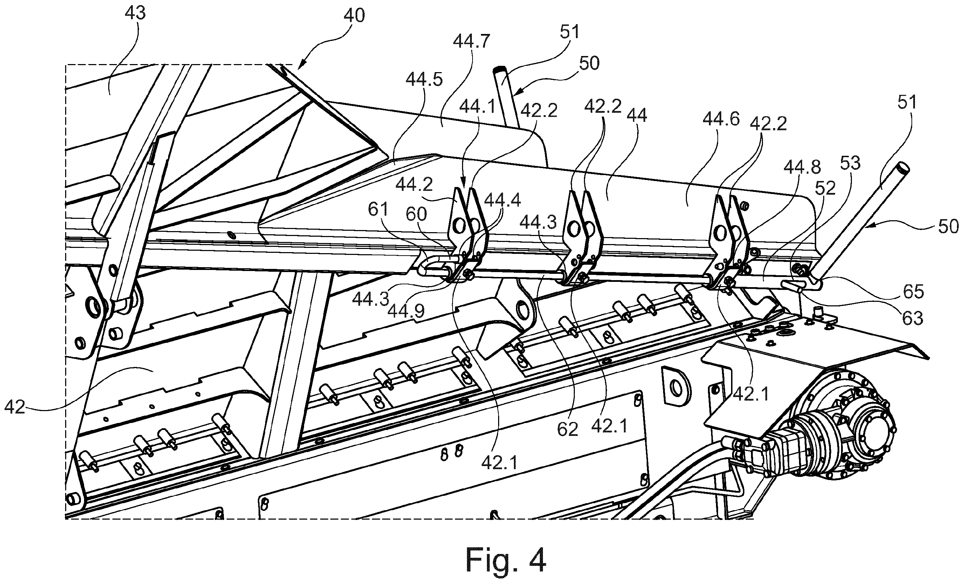

Wie Figur 4 zeigt, ist im Bereich des hinteren Schwenklagers 44.1 ein Haltestück 44.9 vorgesehen. Das Haltestück 44.9 nimmt das freie Ende des Verriegelungselements 60 auf, wenn sich der Verriegelungsschieber in seiner Entriegelungsposition befindet. Gleichzeitig schlägt der Anschlag 65 an dem Übertragungselement 52 an, sodass ein weiterer Versatz des Verriegelungsschiebers in Entriegelungsrichtung nicht möglich ist. Über diese Maßnahme ist gesichert, dass das Verriegelungselement 60 stets lagerichtig dem Schwenklager 44.1 zugeordnet bleibt.

Wie die Figuren 3 und 4 erkennen lassen, kann zur Sicherung der Montageposition der Seitenwanderhöhung 44 noch ein weiteres Sicherungselement 44.8 verwendet sein. Dieses ist an dem Schwenklager 44.1 anbringbar, welches dem Bühnenabschnitt 34 zugeordnet ist und hier in Greifweite des Benutzers liegt. Das Sicherungselement 44.8 kann als Bolzen ausgebildet sein. Dieser ist durch die zueinander fluchtenden Verriegelungsaufnahmen 44.4 der Lagerabschnitte 44.2 dieses Schwenklagers 44.1 hindurchgesteckt und gesichert.

## Patentansprüche

1. Gesteins-Bearbeitungsmaschine (10) mit einem Aufgabetrichter (40) und einer diesem nachgeordneten Prozesseinheit (20),
wobei dem Aufgabetrichter (40) eine Fördereinrichtung, insbesondere ein Trichterabzugsband (12) zugeordnet ist,
wobei der Aufgabetrichter (40) eine Trichterseitenwand (42) aufweist,
und wobei der Trichterseitenwand (42) eine Seitenwanderhöhung (44) zugeordnet ist, die zwischen einer aufgeklappten Arbeitsposition und einer abgeklappten Transportposition verschwenkbar ist,
**dadurch gekennzeichnet,**
**dass** der Seitenwanderhöhung (44) eine Bedieneinheit (50) mit einem Hebel (51) zur Verschwenkung der Seitenwanderhöhung (44) zugeordnet ist, wobei der Hebel (51) mittels eines Übertragungselements (52) mit der Seitenwanderhöhung (44) gekoppelt ist,
und **dass** die Seitenwanderhöhung (44) in der aufgeklappten Arbeitsposition mit einem verstellbaren Verriegelungselement (60) gesichert ist.

2. Gesteins-Bearbeitungsmaschine (10) nach Anspruch 1, **dadurch gekennzeichnet, dass** der Hebel (51) über eine lösbare Formschlussverbindung, die vorzugsweise als Steckverbindung ausgebildet ist, mit dem Übertragungselement (52) gekoppelt bzw. koppelbar ist, wobei die Formschlussverbindung einen Formschluss in Schwenkrichtung des Hebels (51) bildet.

3. Gesteins-Bearbeitungsmaschine (10) nach Anspruch 1 oder 2, **dadurch gekennzeichnet, dass** die Seitenwanderhöhung (44) mittels eines oder mehrerer Schwenklager (44.1), um eine Schwenkachse verschwenkbar ist, wobei die Schwenklager (44.1) jeweils mittels einem Lagerabschnitt (44.2) an der Seitenwanderhöhung (44) und mit einem Gegenlagerstück (42.1) an der Trichterseitenwand (42) mittelbar oder unmittelbar befestigt ist, und dass die Betätigungseinheit (62) an dem Lagerabschnitt (44.2) eines der Schwenklager (44.1) drehfest gekoppelt ist.

4. Gesteins-Bearbeitungsmaschine (10) nach einem der Ansprüche 1 bis 3, **dadurch gekennzeichnet, dass** die Trichterseitenwand (42), die Seitenwanderhöhung (44) und die Schwenkachse, um die die Seitenwanderhöhung (44) verschwenkt werden kann, sich in Transportrichtung der Fördereinrichtung erstrecken, und dass der Hebel (51) an dem in Transportrichtung hinteren Endbereich der Seitenwand (42) so angeordnet ist, dass er von einer Bedienperson, die vorzugsweise auf einer Arbeitsbühne (30) steht, zugänglich ist.

5. Gesteins-Bearbeitungsmaschine (10) nach einem der Ansprüche 1 bis 4, **dadurch gekennzeichnet, dass** an das Verriegelungselement (60) über einen Verbindungsabschnitt (61) ein Verriegelungsschieber (62) angekoppelt ist, wobei der Verriegelungsschieber (62) einen Griff (63) trägt oder an einen solchen angekoppelt ist, und dass der Griff (63) vorzugsweise im Bereich des Hebels (51) angeordnet ist oder dass der Verriegelungsschieber (62) drehfest mit dem Hebel (51) verbunden ist.

6. Gesteins-Bearbeitungsmaschine (10) nach einem der Ansprüche 1 bis 5, **dadurch gekennzeichnet, dass** im Bereich des Aufgabetrichters (40) eine Arbeitsbühne (30) angeordnet ist, die einen Bühnenabschnitt (34) aufweist, über die der Hebel (51) und ein Griff (63) des Verriegelungsschiebers (62) für eine Bedienperson zugänglich sind, wobei die Seitenwanderhöhung (44) vorzugsweise im Bereich dieses Bühnenabschnitts (34) endet, und dass das dem Bühnenabschnitt (34) abgewandte Ende des Verriegelungsschiebers (62) das Verriegelungselement (60) trägt.

7. Gesteins-Bearbeitungsmaschine (10) nach einem der Ansprüche 1 bis 6, **dadurch gekennzeichnet, dass** die Seitenwanderhöhung (44) mittels zweier oder mehrere Schwenklager (44.1) an die Trichterseitenwand (42) schwenkbar angekoppelt ist, und dass die Schwenklager (44.1) Führungselemente (44.3) aufweisen, die eine Schiebeführung für den Verriegelungsschieber (62) bilden.

8. Gesteins-Bearbeitungsmaschine (10) nach Anspruch 7, **dadurch gekennzeichnet, dass** die Schwenkachse der Schwenklager (44.1) durch die Führungselemente (44.3) verläuft.

9. Gesteins-Bearbeitungsmaschine (10) nach einem der Ansprüche 1 bis 8, **dadurch gekennzeichnet, dass** das Übertragungselement (52) als offenes oder geschlossenes Hohlprofil ausgebildet ist oder ein solches aufweist, und dass der Verriegelungsschieber (62) in oder an dem Hohlprofil geführt ist.

10. Gesteins-Bearbeitungsmaschine (10) nach Anspruch 9 **dadurch gekennzeichnet, dass** an den Verriegelungsschieber (62) ein Griff (63) zur Verstellung des Verriegelungsschiebers (62) zwischen einer Verriegelungsstellung und einer Entriegelungsstellung des Verriegelungselements angekoppelt ist, und dass der Griff (63) vorzugsweise in einer Führung (53) des Übertragungselements (52) geführt ist.

11. Gesteins-Bearbeitungsmaschine (10) nach einem der Ansprüche 1 bis 10, **dadurch gekennzeichnet, dass** der Verriegelungsschieber (62) eine Aufnahme für ein Sperrelement (64) aufweist, welches in der Verriegelungsposition des Verriegelungsschiebers (62) die Stellbewegung des Verriegelungsschiebers (62) in die Entriegelungsposition blockiert, wobei vorzugsweise das Sperrelement (64) im Bedienbereich des Hebels (51) angeordnet ist.

12. Gesteins-Bearbeitungsmaschine (10) nach einem der Ansprüche 1 bis 11, **dadurch gekennzeichnet, dass** der Verriegelungsschieber (62) als Profilabschnitt ausgebildet ist oder einen solchen aufweist, wobei der Profilabschnitt an seinem einen längsseitigen Ende das Verriegelungselement (60) trägt und an seinem anderen Ende bis in den Bedienbereich des Hebels (51) geführt ist.

13. Gesteins-Bearbeitungsmaschine (10) nach Anspruch 12, **dadurch gekennzeichnet, dass** der Profilabschnitt des Verriegelungsschiebers (62) an seinem dem Hebel (51) abgewandten Ende einen abgebogenen Bereich aufweist, der den Verbindungsabschnitt (61) bildet und der das Verriegelungselement (60) im Abstand zu der Schwenkachse der Seitenwanderhöhung (44) hält.

14. Gesteins-Bearbeitungsmaschine (10) nach einem der vorhergehenden Ansprüche, **dadurch gekennzeichnet, dass** der Verriegelungsschieber (62) zusätzlich zu dem Verriegelungselement (60) ein weiteres Verriegelungselement trägt, welches in dem dem Hebel (51) zugewandten Bereich im Abstand zu der Schwenkachse der Seitenwanderhöhung (44) angeordnet ist.

15. Gesteins-Bearbeitungsmaschine (10) nach einem der vorhergehenden Ansprüche **dadurch gekennzeichnet, dass** das Übertragungselement (52) Teil des Verriegelungsschiebers (62) ist, wobei der Hebel (51) drehfest mit dem Verriegelungsschiebers (62) verbunden ist.
